Europäisches Patentamt

European Patent Office

Office européen des brevets

(19)

(11)　EP 0 986 928 B1

(12)　　FASCICULE DE BREVET EUROPEEN

(45) Date de publication et mention
de la délivrance du brevet:
**25.08.2004 Bulletin 2004/35**

(21) Numéro de dépôt: **98928413.8**

(22) Date de dépôt: **02.06.1998**

(51) Int Cl.⁷: **H04Q 7/38**

(86) Numéro de dépôt international:
**PCT/FR1998/001106**

(87) Numéro de publication internationale:
**WO 1998/056204 (10.12.1998 Gazette 1998/49)**

(54) **PROCEDE D'ALLOCATION DYNAMIQUE DE CANAUX DANS UN RESEAU CELLULAIRE DE RADIOCOMMUNICATION**

DYNAMISCHE KANALVERGABEVERFAHREN IN EINEM ZELLULAREN KOMMUNIKATIONSNETZ

DYNAMIC CHANNEL ASSIGNMENT METHOD IN A CELL COMMUNICATION NETWORK

(84) Etats contractants désignés:
**CH DE ES FI FR GB IT LI SE**

(30) Priorité: **04.06.1997 FR 9706873**

(43) Date de publication de la demande:
**22.03.2000 Bulletin 2000/12**

(73) Titulaire: **FRANCE TELECOM**
**75015 Paris (FR)**

(72) Inventeurs:
• **VERRIER, David**
**F-75015 Paris (FR)**
• **PLAS, Patrick**
**F-75015 Paris (FR)**

(74) Mandataire: **Loisel, Bertrand et al**
**Cabinet Plasseraud**
**65/67 rue de la Victoire**
**75440 Paris Cedex 09 (FR)**

(56) Documents cités:
**WO-A-96/31075**　　　　　**GB-A- 2 266 433**
**US-A- 5 507 008**

• **SIRIN TEKINAY ET AL: "HANDOVER AND**
**CHANNEL ASSIGNMENT IN MOBILE CELLULAR**
**NETWORKS" IEEE COMMUNICATIONS**
**MAGAZINE, vol. 29, no. 11, 1 novembre 1991,**
**pages 42-46, XP000279121**

## Description

La présente invention concerne l'allocation dynamique de canaux (DCA : "Dynamic Channel Allocation") pour un réseau cellulaire de radiocommunication tel qu'un réseau de type GSM.

On distingue les techniques de DCA à adaptation aux interférences et les techniques de DCA à adaptation au trafic. Les techniques à adaptation aux interférences tiennent compte de la qualité des signaux radio reçus pour attribuer dynamiquement les canaux supposés être les moins bruités. Les techniques à adaptation au trafic reposent sur la connaissance des canaux utilisés dans chaque cellule pour faire en sorte de ne pas attribuer deux canaux identiques dans des cellules voisines : elles ne font pas intervenir de critère de qualité radio, mais nécessitent des échanges d'informations entre les différentes entités allocatrices de canaux dans le réseau.

Dans le domaine des algorithmes de DCA à adaptation aux interférences, les algorithmes jusqu'ici exposés sont adaptés à l'attribution des canaux sur la voie radio pour des communications en mode paquet (voir M. FRULLONE et al : "Dynamic Channel Allocation for ATDMA", Proc. of the Race Summit, Lisbonne, Novembre 1995, pages 299-303). Ceci ne convient pas à des réseaux qui, comme le GSM, supportent des communications en mode circuit. Quant aux algorithmes de DCA à adaptation au trafic, les études réalisées sont essentiellement théoriques. Du fait que ces mécanismes nécessitent des échanges importants de signalisation entre les différentes entités allocatrices de ressources radio du réseau, ils sont peu adaptés aux réseaux cellulaires actuels qui ne facilitent pas ces échanges. Ils ne présentent donc pour l'instant que peu d'intérêt.

Aujourd'hui, les opérateurs de réseaux mobiles appliquent des techniques de planification de canaux pour répartir sur les différentes cellules du réseau les canaux physiques à attribuer. Le terme "planification" signifie qu'on attribue à chaque cellule une liste propre de canaux physiques dans laquelle sont choisis les canaux lors de leur attribution. Dans la majorité des systèmes, la planification de canaux est simplifiée en une planification des fréquences.

L'avantage d'une telle technique est qu'il est possible de faire en sorte qu'aucun canal ne soit attribué à deux cellules voisines, ce qui réduit le risque d'interférence entre deux canaux attribués dans des cellules voisines. On assure ainsi une certaine qualité radio à chaque canal attribué dans le réseau.

Cependant, la planification de fréquences présente les désavantages suivants :

1) Elle est une opération fastidieuse à effectuer. Plus la topologie de la couverture cellulaire est irrégulière (taille des cellules différentes, motifs non symétriques, ...), plus la planification est difficile à faire. Le concept de réseau multicellulaire, avec des micro-cellules et des macro-cellules "parapluies", rend encore plus difficile toute tentative de planification de fréquences, puisqu'il introduit plusieurs niveaux de couverture nécessitant chacun une planification de fréquences. Cela a également pour effet de restreindre le nombre de fréquences attribuées à chaque cellule (d'où une limitation en trafic).

2) La planification de fréquences ne facilite pas les modifications de topologie du réseau. Par exemple, à chaque ajout ou retrait de stations de base dans le réseau, une nouvelle planification des fréquences est nécessaire sur une partie importante du réseau. Ce point est d'autant plus important que les opérateurs sont désormais amenés à souvent modifier leur ingénierie cellulaire (intégration dans le réseau existant de zones micro-cellulaires).

3) La planification de fréquences ne permet pas au système d'attribuer les ressources aux mobiles de façon flexible. Du fait du nombre fixe (et limité) de ressources attribuées par cellules, le système ne peut pas absorber des montées locales de trafic par manque de ressources disponibles.

Si la planification de fréquences peut rester une solution intéressante en environnement macro-cellulaire (configuration cellulaire régulière et simple, répartition de trafic homogène), elle l'est beaucoup moins pour les autres types d'environnements (micro-cellulaires, cellules "parapluies", pics de trafic, ...).

La forte progression actuelle du trafic des communications mobiles due au succès des téléphones portables pousse les opérateurs à densifier leur réseau. Ces derniers sont alors amenés aujourd'hui à combiner tout type de configuration cellulaire (macro-cellules, micro-cellules, cellules parapluies, antennes omnidirectionnelles, antennes directionnelles...) et demandent par conséquence un mécanisme d'allocation de canaux plus souple que le plan de fréquences.

WO96/31075 décrit un processus d'allocation dynamique de canaux pour un réseau cellulaire de radiocommunication, dans lequel des "préférences statistiques", c'est-à-dire des priorités, sont affectées à différents canaux fréquentiels dans une même cellule. La sélection d'un canal fréquentiel à utiliser est fondée sur ces "préférences statistiques". La détermination des "préférences statistiques" repose sur des mesures de caractéristiques des canaux, effectuées lorsque ces canaux ne sont pas utilisés.

Le mécanisme de DCA de ce document WO96/31075 ne fait aucune exploitation des mesures radio faites en cours de communication. Il en est de même du mécanisme décrit dans US-A-5 507 008. D'après ce dernier document, la station de base d'une cellule vérifie, à l'établissement d'une communication, que le canal envisagé ne subit pas trop d'interférence. Si le rapport canal/interféreur (CIR) est trop bas, la station de base passe au canal suivant d'une liste générale commune à toutes les cellules.

GB-A-2 266 433 décrit un autre mécanisme de DCA dans lequel il est tenu plusieurs listes de fréquences par cellule. La station de base détermine une perte de transmission d'un signal renvoyé par une station mobile pour sélectionner une liste de fréquences dans laquelle le canal est choisi en fonction d'un critère de qualité. Ce critère de qualité peut notamment être basé sur le rapport canal/interféreur. La mise à jour des listes de fréquences dépend du succès rencontré lors de précédentes tentatives de sélection sur les canaux concernés. Là encore, il n'est fait aucune exploitation des mesures radio effectuées en cours de communication.

Un but de l'invention est de proposer une technique efficace d'allocation des ressources radio dédiées aux communications qui ne requiert pas au préalable une planification de fréquences et qui permette ainsi à l'opérateur d'échapper aux contraintes ci-dessus.

On souhaite en outre que le procédé permette au réseau d'absorber dans certaines conditions des montées en trafic.

L'invention propose ainsi un procédé d'allocation dynamique de canaux dans un réseau cellulaire de radiocommunication, réseau dans lequel un ensemble de canaux physiques est utilisé pour former des canaux logiques dédiés à des communications en mode circuit entre des stations mobiles et des stations de base géographiquement distribuées, chaque canal logique appartenant à un canal physique, et dans lequel, pour chaque communication établie entre une station de base et une station mobile sur un canal logique, il est mesuré périodiquement des paramètres radio représentatifs de conditions de ladite communication sur ledit canal logique. Selon l'invention, le procédé comporte les opérations suivantes effectuées pour chaque station de base :

- associer à chaque canal physique dudit ensemble un index de priorité respectif ;
- tenir une première liste de canaux physiques que ladite station de base n'est pas en train d'utiliser pour communiquer avec une station mobile, et au moins une seconde liste de canaux physiques occupés comportant chacun au moins un canal logique actif dédié à une communication en cours entre ladite station de base et une station mobile ;
- mettre à jour les index de priorité associés aux canaux physiques de la seconde liste sur la base des paramètres radio mesurés relativement aux communications en cours sur des canaux logiques appartenant auxdits canaux physiques ; et
- à l'établissement d'une communication avec une station mobile, sélectionner pour ladite communication un canal logique accessible et non actif appartenant à un canal physique dont l'index de priorité est maximal.

Grâce à ce mécanisme de DCA, il n'est plus nécessaire d'effectuer avant la mise en service du réseau une planification de fréquences entre les cellules afin de répartir entre elles les ressources radio attribuables aux communications mobiles. Le fait qu'un opérateur n'ait plus besoin d'effectuer une planification de fréquences introduit alors une grande souplesse dans le déploiement du réseau. Par exemple, l'intégration de couches micro-cellulaires dans un réseau macro-cellulaire est largement facilitée, puisqu'on n'a plus besoin de partager le spectre radio entre les différentes couches cellulaires, et entre les cellules au sein d'une même couche.

Le procédé permet d'obtenir une planification automatique des canaux entre les cellules. Il assure que le système converge rapidement et automatiquement vers une configuration stable dans laquelle les ressources radio sont correctement réparties entre les cellules (pas de recouvrement de canaux entre deux cellules voisines). De plus, ce procédé de DCA est très réactif aux diverses modifications pouvant intervenir dans le réseau (modifications de la topologie, variations de trafic) car il sait modifier en conséquence la répartition des canaux entre les cellules. Le procédé de DCA selon l'invention est donc utilisable dans tous les types de configuration d'un réseau GSM ou analogue.

L'invention a l'avantage de ne susciter aucune modification des protocoles de signalisation actuels d'un réseau de type GSM. Pour appliquer l'invention, il suffit de mettre en oeuvre le procédé de DCA au niveau des BSC (contrôleurs de stations de base).

Bien qu'un des avantages d'un mécanisme de DCA soit de ne pas nécessiter de plan de fréquences (FCA), le mécanisme de DCA selon l'invention n'est en rien incompatible avec un plan de fréquences. Un opérateur GSM peut appliquer ce mécanisme de DCA dans un réseau utilisant par ailleurs un plan de fréquences. En fait, pour chaque cellule, on peut préciser l'étendue du spectre radio dans lequel l'algorithme de DCA va puiser les ressources. Il suffit pour cela de choisir convenablement l'ensemble de canaux physiques soumis au procédé. L'invention permet alors toutes sortes de combinaisons FCA/DCA, ce qui apporte une grande souplesse dans le déploiement du réseau.

Dans un mode d'exécution préféré du procédé selon l'invention, pour chaque station de base, on compare les index de priorité de canaux des première et seconde listes pour déclencher un transfert automatique intracellulaire de communication depuis un canal logique appartenant à un canal physique occupé de la seconde liste vers un canal logique accessible appartenant à un canal physique de la première liste dont l'index de priorité est supérieur à celui dudit canal physique occupé de la seconde liste.

Ceci améliore la rapidité de convergence de l'algorithme de DCA vers une configuration stable. Mais surtout, ceci permet d'obtenir une optimisation de la qualité de communication sur les canaux employés : si une cellule essaie d'utiliser un canal déjà utilisé par une cellule voisine, elle détectera rapidement la présence d'interférences et choisira un autre canal par la procédure de transfert automatique (handover) intracellulaire.

D'autres particularités et avantages de l'invention apparaîtront dans la description ci-après d'un exemple de réalisation non limitatif, en référence aux dessins annexés, dans lesquels :

- la figure 1 est un schéma d'un réseau cellulaire de radiocommunication mettant en oeuvre la présente invention ;
- la figure 2 montre des données stockées pour chaque station de base dans le réseau de la figure 1 ; et
- les figures 3 à 6 sont des organigrammes de procédures applicables dans un procédé selon l'invention.

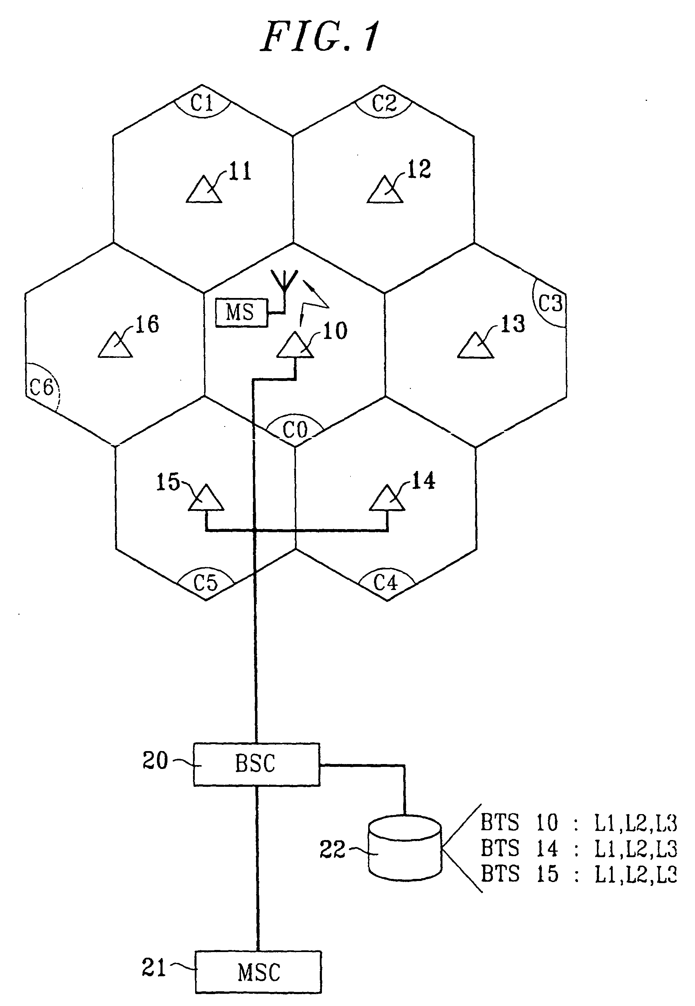

La figure 1 montre sept stations de base (BTS) 10-16 d'un réseau de radiotéléphonie cellulaire. La zone de couverture de chaque station de base 10-16 est appelée cellule C0-C6, et représentée de façon stylisée par un hexagone sur la figure 1.

Dans la suite de la présente description, on supposera que le réseau cellulaire est un réseau de type GSM, sans que ceci limite la portée de l'exposé. Dans un réseau de ce type, chaque station de base est reliée à une unité fonctionnelle appelée contrôleur de station de base (BSC), chaque BSC pouvant contrôler une ou plusieurs stations de base. Ainsi, dans le cas représenté sur la figure 1, le BSC 20 est associé aux stations de base 10, 14, 15.

Chaque BSC est relié à un centre de commutation du service mobile (MSC) 21 servant notamment d'interface avec le réseau téléphonique public commuté.

Les systèmes GSM font appel à des mécanismes d'accès multiple par répartition en fréquence (FDMA) et par répartition en temps (TDMA). Chaque canal physique de communication radio est ainsi identifié par une fréquence porteuse et un index de tranche temporelle repérant la position temporelle du canal dans la trame TDMA (8 tranches par trame dans le cas du GSM).

Les canaux logiques de trafic (TCH : "Traffic Channel") le plus souvent utilisés pour transmettre de la parole ou des données utilisent des canaux physiques entiers. Certains types de canaux logiques dédiés n'utilisent toutefois qu'une fraction d'un canal physique. C'est le cas par exemple des canaux de trafic à demi-débit qui peuvent être multiplexés par paires sur le même canal physique. Les canaux logiques de signalisation dits SDCCH ("Stand-alone Dedicated Control Channel") servent à véhiculer des messages de contrôle d'appel, de gestion de la mobilité et de gestion des ressources radio. Le canal SDCCH est le premier canal attribué à un mobile au cours d'un établissement d'appel. Il est ensuite libéré pour faire place à un canal TCH avec son canal de signalisation associé (SACCH : "Slow Associated Control Channel") dans le cas des services de parole ou de transfert de données. Pour certains services, le canal SDCCH peut toutefois être maintenu. C'est le cas notamment des services de transmission de messages courts. Un nombre M de canaux SDCCH peuvent être multiplexés sur le même canal physique (M = 4 ou 8).

Dans la suite du présent exposé, on fera référence seulement aux canaux TCH à plein débit et aux canaux SDCHH/4 qui sont le plus couramment utilisés dans les réseaux exploités (M = 4). On pourra observer que les procédures décrites peuvent être étendues sans difficulté à d'autres types de canaux logiques tels que TCH à demi-débit (M = 2), SDCCH/8 (M = 8) ...

Pour chaque canal de communication dédié, les stations mobiles et les stations de base effectuent des mesures de paramètres radio représent des conditions de cette communication, en particulier le niveau de puissance reçue par la station mobile ou la station de base ou la qualité du signal reçu par la station mobile ou la station de base. Ces mesures sont décrites en détail dans la recommandation GSM 05.08 (Draft pr ETS 300 578, 2e édition, mars 1995, European Télécommunications Standards Institute), à laquelle on pourra se référer.

Les mesures sont effectuées avec une périodicité liée à la multitrame SACCH (480 ms). Pour chaque sens de communication, le paramètre RXLEV est la moyenne des niveaux de champ des échantillons reçus sur la période de 480 ms. Chaque valeur de RXLEV est codée de décibel en décibel sur six bits, la valeur RXLEV = 0 correspondant à une puissance inférieure à - 110 dBm, et la valeur RXLEV = 63 correspondant à une puissance supérieure à 48 dBm. Pour chaque sens de communication, le paramètre de qualité RXQUAL est déduit des taux d'erreur des bits reçus sur le canal sur la période de 480 ms estimés à partir de la métrique utilisée dans l'égaliseur de canal de Viterbi et/ou dans le décodeur convolutionnel de Viterbi. Chaque valeur de RXQUAL est codée de 0 à 7 selon les intervalles de valeur où tombe le taux d'erreur binaire observé (respectivement 0%-0,2% / 0,2%-0,4% / 0,4%-0,8% / 0,8%-1,6% / 1,6%-3,2% /3,2%-6,4% / 6,4%-12,8% / 12,8%-100%). A partir de RXQUAL = 4, on peut dire que la qualité du lien radio devient mauvaise.

Les mesures effectuées par la station mobile sur la liaison descendante sont incluses dans un message appelé MEASUREMENT_REPORT en terminologie GSM. Pour les procédures de contrôle des liaisons radio, la station de base transmet ces mesures à son BSC dans un message appelé MEASUREMENT_RESULT dans lequel elle inclut en outre les mesures qu'elle a effectuées sur la liaison montante. Ces mesures sont traitées au niveau du BSC qui assure les fonctions de contrôle des liaisons radio.

La présente invention propose de traiter ces échantillons de mesure reçus par le BSC dans le cadre d'un procédé d'allocation dynamique de canaux. Ce procédé peut être entièrement mis en oeuvre au niveau du BSC, de sorte qu'il ne nécessite aucun aménagement particulier des protocoles GSM.

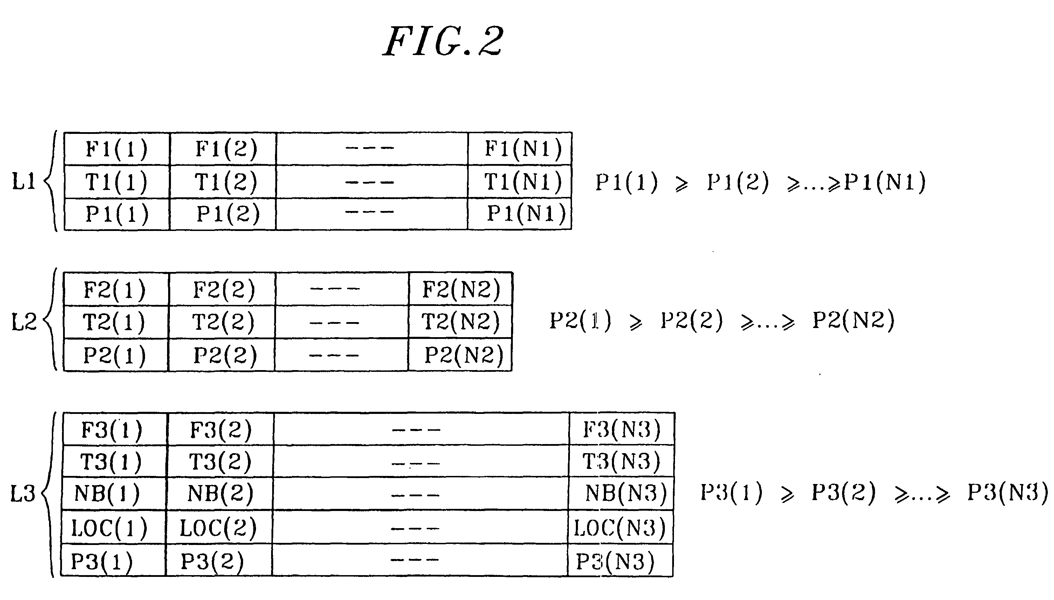

Chaque BSC 20 est associé à une mémoire 22 (figure 1) qui contient des listes de canaux pour chaque station de base 10, 14, 15 qu'il contrôle. La structure de ces listes L1, L2, L3 pour chacune des stations de base est illustrée sur la figure 2.

La première liste L1 contient des canaux physiques inoccupés à l'instant considéré, c'est-à-dire que la station de base n'est pas en train d'utiliser pour communiquer avec une station mobile.

Pour tenir la liste L1, la mémoire 22 contient trois tableaux F1, T1, P1 de longueur au moins égale au nombre N de canaux physiques de l'ensemble de canaux soumis au mécanisme de DCA. Si N1 désigne le nombre de canaux inoccupés à l'instant considéré, chacun de ces canaux i ($1 \leq i \leq N1$) correspond à la tranche temporelle T1(i) ($1 \leq T1(i) \leq 8$) de la fréquence de communication F1(i), et est associé à un index de priorité P1(i). Ces trois tableaux sont ordonnés dans l'ordre décroissant des index de priorité P1(i).

La seconde liste L2 contient des canaux physiques utilisés comme canaux de trafic TCH à l'instant considéré entre la station de base et une station mobile.

Pour tenir la liste L2, la mémoire 22 contient trois tableaux F2, T2, P2 de longueur au moins égale au nombre N de canaux physiques de l'ensemble de canaux soumis au mécanisme de DCA. Si N2 désigne le nombre de canaux physiques supportant un canal logique TCH actif à l'instant considéré, chacun de ces canaux j ($1 \leq j \leq N2$) correspond à la tranche temporelle T2(j) ($1 \leq T2(j) \leq 8$) de la fréquence de communication F2(j), et est associé à un index de priorité P2(j). Ces trois tableaux sont ordonnés dans l'ordre décroissant des index de priorité P2(j).

La troisième liste L3 contient des canaux physiques supportant, à l'instant considéré, un ou plusieurs canaux logiques SDCCH.

Pour tenir la liste L3, la mémoire 22 contient cinq tableaux F3, T3, NB, LOC, P3 de longueur au moins égale au nombre N de canaux physiques de l'ensemble de canaux soumis au mécanisme de DCA. Si N3 désigne le nombre de canaux physiques supportant au moins un canal SDCCH actif à l'instant considéré, chacun de ces canaux k ($1 \leq k \leq N3$) correspond à la tranche temporelle T3(k) ($1 \leq T3(k) \leq 8$) de la fréquence de communication F3(k), et est associé à un index de priorité P3(k). NB(k) représente le nombre de canaux logiques SDCCH supportés par le k-ième canal physique de la liste L3 ($1 \leq NB(k) \leq M$), et LOC(k) repère les positions de ces canaux SDCCH sur le canal physique. LOC(k) se compose ainsi de quatre bits LOC(k,m) tels que LOC(k,m) = 1 si un canal SDCCH actif occupe la m-ième position de canal logique ($1 \leq m \leq M$) du k-ième canal physique de la liste L3, et LOC(k,m) = 0 sinon. Ces cinq tableaux F3, T3, NB, LOC, P3 sont ordonnés dans l'ordre décroissant des index de priorité P3(k).

Chacun des canaux physiques traités par le procédé de DCA appartient à l'une des trois listes L1, L2, L3, et se trouve donc associé à un index de priorité respectif P1(i) ou P2(j) ou P3(k). Ces index de priorité sont calculés et mis à jour durant les communications radio intervenant sur les canaux considérés, c'est-à-dire pendant que les canaux en question se trouvent dans la liste L2 ou dans la liste L3.

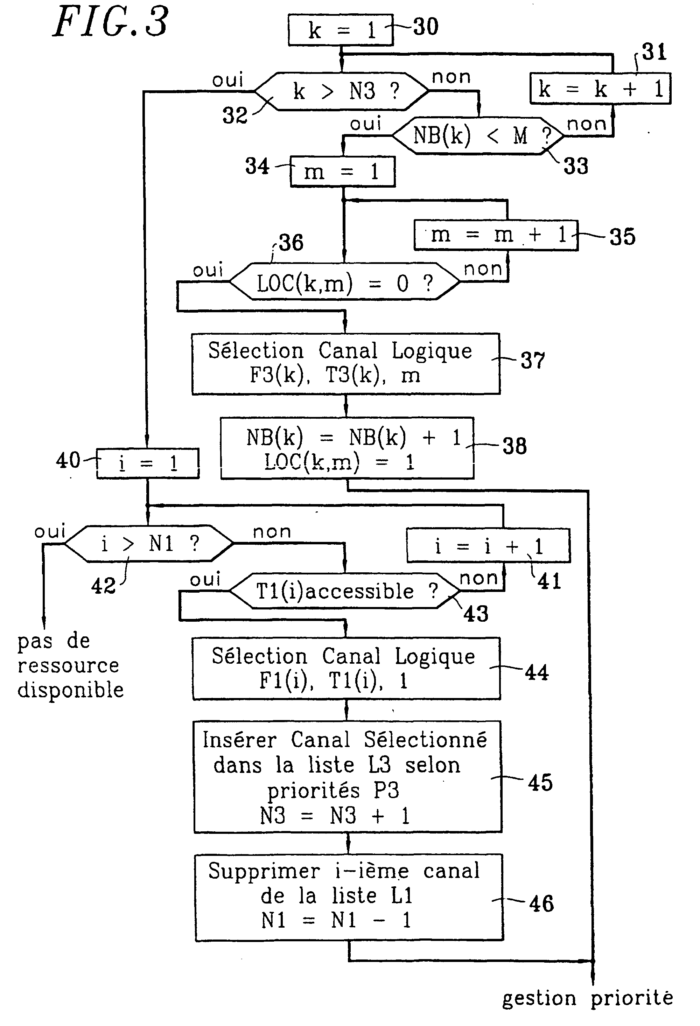

On va maintenant décrire, en référence aux figures 3 à 6, des procédures mises en oeuvre selon l'invention pour gérer les listes L1, L2, L3 et allouer dynamiquement des canaux aux communications.

Dans un réseau GSM, la méthode d'attribution d'un canal SDCCH est au choix du constructeur. Certains préfèrent attribuer un canal SDCCH sur un canal physique complètement libre, en anticipant que ce dernier sera ensuite utilisé par le canal TCH qui le relaiera. Dans ce cas, le procédé sélectionne un canal physique accessible de la liste L1 ayant un index de priorité maximal.

Par canal physique accessible, on entend un canal physique qui peut être attribué à une unité d'émission-réception (TRX) de la station de base. Un canal physique libre F1(i), T1(i) de la liste L1 sera inaccessible si, par exemple, tous les TRX de la station de base sont déjà occupés sur la tranche temporelle T1(i).

Dans le cas d'un service de messages courts, l'option ci-dessus a le désavantage de réserver un canal physique entier uniquement pour un canal SDCCH pendant la durée de transmission du message, c'est-à-dire que la bande passante n'est pas optimisée.

Une option préférée, dont un mode d'implémentation est illustré par la figure 3, consiste à choisir en priorité, pour l'allocation d'un nouveau canal logique SDCCH, un canal physique de la liste L3 ayant au moins une composante SDCCH libre. Si un tel canal n'est pas disponible, le canal physique libre et accessible de plus haute priorité sera sélectionné dans la liste L1.

En référence à la figure 3, la boucle de recherche d'un canal SDCCH parmi les canaux physiques de la liste L3 commence à l'étape 30 par l'initialisation k = 1. Cet index k est incrémenté d'une unité à l'étape 31 si $k \leq N3$ et NB(k) = M (comparaisons successives 32 et 33). Quand la comparaison 33 révèle un canal k ayant au moins une composante SDCCH libre (NB(k) < M), le BSC détermine la position m d'une telle composante (LOC(k,m) = 0) dans une boucle 34-36. Le canal logique non actif correspondant à la position m du canal physique F3(k), T3(k) est alors sélectionné à l'étape 37 comme le canal SDCCH à attribuer. La mise à jour 38 de la liste L3 consiste ensuite simplement à augmenter d'une unité le nombre NB(k) de composantes SDCCH occupées sur le canal physique et à prendre LOC(k, m) = 1. Le BSC passe ensuite à la procédure de gestion de l'index de priorité du canal physique supportant le canal logique, qui sera décrite plus loin.

Quand la comparaison 32 montre qu'aucun canal physique de la liste L3 ne peut servir à supporter le canal SDCCH à attribuer (k > N3), le BSC recherche le canal physique libre et accessible de plus haute priorité.

La boucle de recherche est initialisée par i = 1 à l'étape 40. Cet index i est incrémenté d'une unité à l'étape 41 si i ≤ N1 et la tranche temporelle T1(i) est inaccessible (tests successifs 42 et 43). Si la comparaison 42 montre que i > N1, l'allocation du canal échoue en raison de l'absence de ressources radio disponibles. Dans le cas normal, le test 43, qui peut consister simplement à vérifier que le nombre de canaux physiques déjà alloués et ayant le même index de tranche temporelle que le canal testé est inférieur au nombre de TRX de la station de base, révélera un canal libre et accessible i. Un canal logique arbitraire (par exemple celui de rang 1) de ce canal physique F1(i), T1(i) est alors sélectionné à l'étape 44 pour constituer le canal SDCCH. Le BSC procède alors à la mise à jour des listes L1 et L3. A l'étape 45, il insère dans la liste L3 le canal physique supportant le canal logique qui vient d'être sélectionné (avec NB = 1 et LOC = 1000), augmente d'une unité la longueur N3 de la liste L3 et réordonne cette liste dans l'ordre des index de priorité P3 décroissants. A l'étape 46, le i-ième canal de la liste L1, qui vient d'être sélectionné, est supprimé de cette liste dont la longueur N1 est diminuée d'une unité, et dont les éléments sont réordonnés selon les index de priorité P1 décroissants. Le BSC passe ensuite à la procédure de gestion de l'index de priorité du canal physique venant d'être alloué.

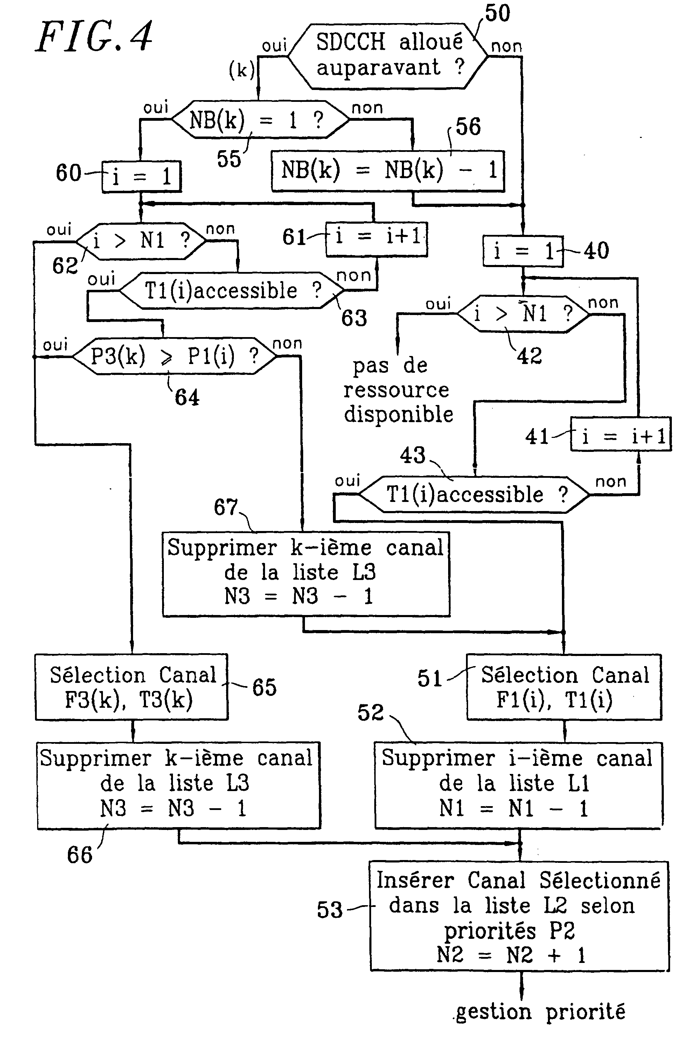

En ce qui concerne la procédure d'attribution d'un canal de trafic TCH, les normes GSM donnent certaines libertés aux opérateurs. Ainsi, un canal TCH peut être attribué dès la première demande en ressources radio (méthode "Very Early Assignment"), ou peut succéder à l'établissement d'un canal SDCCH. Pour des raisons d'optimisation des ressources radio, les opérateurs préfèrent généralement attribuer un canal SDCCH puis un canal TCH. Dans ce dernier cas, il est possible d'attribuer comme canal TCH pour la communication soit le canal physique qui était déjà occupé par le canal SDCCH, soit un canal physique libre. La procédure d'attribution d'un canal TCH illustrée par la figure 4 permet de prendre en compte ces différents cas de figure.

Sa première étape 50 consiste à examiner si un canal SDCCH a été alloué préalablement à l'établissement du canal TCH requis. Il y a deux cas généraux où le canal TCH peut être attribué sans que ceci succède à l'allocation d'un canal SDCCH :

- l'opérateur utilise une méthode d'attribution de type "Very Early Assignment" ; ou
- l'établissement du TCH est occasionné par un transfert automatique de communication entre deux canaux TCH ("handover" ou HO).

Si aucun canal SDCCH n'était alloué, le BSC exécute une boucle 40-43 semblable à celle précédemment décrite en référence à la figure 3 pour identifier le canal physique accessible de la liste L1 ayant le plus grand index de priorité. L'attribution du canal TCH échoue si un tel canal n'est pas disponible. Le i-ième canal physique de la liste L1, identifié comme étant le canal libre et accessible de plus haute priorité, est alors sélectionné à l'étape 51, puis supprimé de la liste L1 à l'étape 52. Enfin, à l'étape 53, le canal physique sélectionné est inséré dans la liste L2, que le BSC réordonne conformément aux index de priorité P2, et le nombre N2 d'éléments de cette liste est augmenté d'une unité. L'index de priorité du canal venant d'être sélectionné est ensuite géré conformément à la procédure décrite plus loin.

Si le test initial 50 montre qu'un canal SDCCH était alloué préalablement à l'établissement du canal TCH, on examine lors de la comparaison 55 si le nombre NB(k) de composantes SDCCH actives du k-ième canal physique de la liste L3 qui supporte le canal SDCCH préalablement alloué est égal ou différent de 1. S'il est différent de 1, ce nombre NB(k) est simplement diminué d'une unité à l'étape 56 en raison de la fermeture du canal SDCCH, puis le BSC procède aux étapes 40-43 et 51-53 précédemment décrites pour attribuer le canal physique libre et accessible de plus haute priorité.

Si la comparaison 55 montre que le k-ième canal physique de la liste L3 ne comportait que le canal SDCCH alloué auparavant (NB(k) = 1), le BSC identifie, lors d'une boucle 60-63 semblable à la boucle 40-43 le canal accessible de la liste L1 ayant le plus grand index de priorité P1(i).

En l'absence d'un tel canal dans la liste L1 (i > N1 lors d'une comparaison 62), ou si cet index de priorité maximal P1(i) n'est pas plus grand que l'index de priorité P3(k) du canal physique qui supportait le canal SDCCH (P3(k) P1(i) lors de la comparaison 64), alors le BSC sélectionne comme canal TCH le k-ième canal physique de la liste L3 à l'étape 65. A l'étape suivante 66, il supprime de la liste L3 le canal venant d'être sélectionné, il diminue d'une unité le nombre N3 de canaux occupés de la liste L3, et il réordonne cette liste dans l'ordre décroissant des index de priorité P3. Le BSC procède enfin à la mise à jour de la liste L2 en y insérant, à l'étape 53, le canal venant d'être sélectionné.

Si la comparaison 64 montre que P3(k) < P1 (i), il est préférable d'allouer le i-ième canal de la liste L1, dont l'index de priorité est supérieur à celui du canal physique du SDCCH. Le BSC supprime alors le k-ième canal de la liste L3 dans une étape 67 identique à l'étape 66, avant de procéder aux étapes 51 à 53 pour sélectionner le i-ième canal de la liste L1 et mettre à jour les listes L1 et L2.

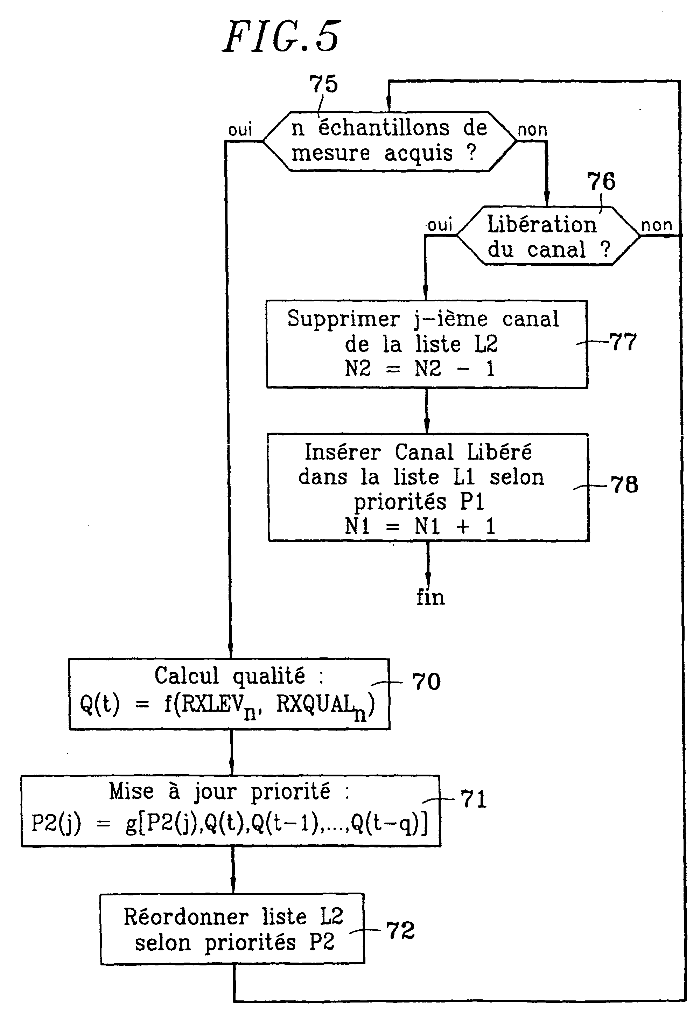

La figure 5 est un organigramme d'une procédure de gestion de l'index de priorité P2(j) du j-ième canal physique de la liste L2 sur lequel une communication est en cours entre une station mobile et la station de base. On présente cette procédure dans le cadre d'un canal TCH (liste L2), étant noté qu'elle est directement transposable dans le cas d'un canal SDCCH (liste L3).

Comme indiqué précédemment, la mise à jour des index de priorité repose sur les mesures radio effectuées périodiquement sur les liaisons montantes et descendantes du canal logique. Une qualité du canal Q(t) est évaluée tous les n échantillons de mesure, c'est-à-dire toutes les n multitrames SACCH. Comme représenté dans le bloc 70 de la figure 5, la qualité Q(t) peut être une fonction des valeurs moyennes, notées $RXLEV_n$, $RXQUAL_n$, des niveaux de champ RXLEV et des paramètres de qualité RXQUAL contenus dans les n derniers échantillons de mesure. Les RXLEV et RXQUAL moyennés peuvent être ceux mesurés sur la liaison montante, sur la liaison descendante, ou encore dans les deux sens de communication. Le nombre n est par exemple égal à 4, ce qui correspond à une mise à jour des index de priorité environ toutes les 2 secondes. Un exemple de fonction $f(RXLEV_n, RXQUAL_n)$ utilisable pour calculer les qualités Q(t) est :

$$f(RXLEV_n, 0) = +3$$
$$f(RXLEV_n, 1) = +3$$
$$f(RXLEV_n, 2) = +3 - 2.(RXLEV_n/63)$$
$$f(RXLEV_n, 3) = +1 - (RXLEV_n/63)$$
$$f(RXLEV_n, 4) = -1 - 2.(RXLEV_n/63)$$
$$f(RXLEV_n, 5) = -5 - 2.(RXLEV_n/63)$$
$$f(RXLEV_n, 6) = -9 - 3.(RXLEV_n/63)$$
$$f(RXLEV_n, 7) = -12$$

A l'étape suivante 71, le BSC met à jour l'index de priorité P2(j) du canal sur la base de la dernière valeur de qualité calculée, ou plus généralement sur la base des q dernières valeurs de qualité calculées. Le nouvel index de priorité P2(j) est par exemple égal à la valeur moyenne des q dernières valeurs de qualité calculées. La fonction de mise à jour g indiquée dans le bloc 71 de la figure 5 est alors :

$$g[P2(j), Q(t),..., Q(t-q)] = P2(j) + [Q(t) - Q(t-q)]/q,$$

les index de priorité de tous les canaux physiques étant initialisés à 0 au démarrage du procédé de DCA.

Après la mise à jour 71 de l'index de priorité P2(j), la liste L2 est réordonnée à l'étape 72 dans l'ordre des priorités décroissantes.

Si le canal F2(j), T2(j), a été libéré avant l'acquisition de n nouveaux échantillons de mesure (tests 75 et 76), l'index de priorité P2(j) ne peut pas être mis à jour. Dans ce cas, le BSC met à jour les listes L1 et L2 aux étapes 77 et 78 en déplaçant le canal libéré de la liste L2 vers la liste L1 (dans le cas de la libération d'un canal logique SDCCH dont le canal physique comporte un ou plusieurs autres canaux SDCCH, les étapes 77 et 78 sont remplacées par une simple décrémentation du nombre NB(k) et par l'inversion du bit correspondant de LOC(k)).

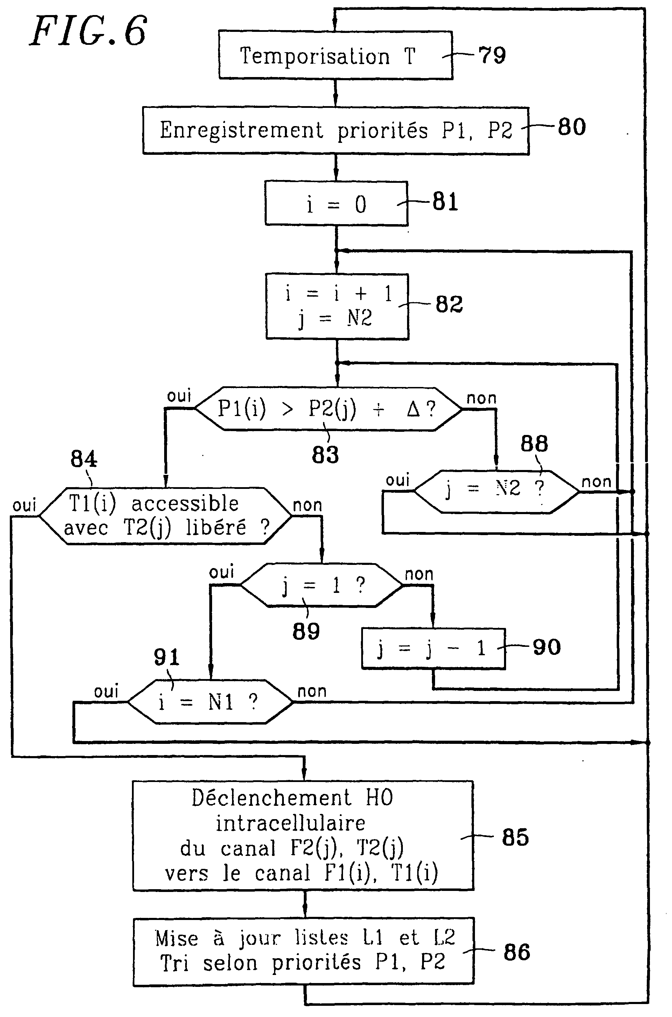

La figure 6 montre l'organigramme d'une procédure d'optimisation du mécanisme de DCA. Cette procédure vise à déclencher des handovers intracellulaires afin d'optimiser l'utilisation des canaux physiques de plus haute priorité, qui sont en principe les plus fiables. Cette procédure commande deux actions principales :

- lorsqu'un canal logique est libéré, si le canal physique qu'il occupait a une priorité plus grande que celle d'un canal physique en cours d'utilisation par un canal logique de même type, alors le BSC déclenche pour ce dernier canal logique un handover intracellulaire vers le canal libéré dont la priorité est supérieure,

- lorsque la qualité d'un canal physique se dégrade sérieusement, la procédure initie pour chacun des canaux logiques qu'il supporte un handover intracellulaire vers un autre canal physique dès que la priorité du canal physique en cours d'utilisation devient inférieure à la priorité d'un autre canal physique pouvant supporter le canal logique.

Les opérations effectuées en réponse au déclenchement d'un handover intracellulaire sont décrites en détail dans la recommandation GSM 05.08 précitée, et ne seront pas décrites en détail ici.

La procédure d'optimisation peut être utilisée pour les canaux de trafic comme pour les canaux SDCCH. Mais comme la durée d'utilisation des canaux SDCCH est généralement brève et comme plusieurs de ces canaux peuvent être multiplexés sur le même canal physique, il paraît préférable de n'appliquer la procédure d'optimisation qu'aux canaux de trafic. Ceci permet d'éviter un grand nombre de handovers intracellulaires de canaux SDCCH.

Une horloge est utilisée pour que la procédure d'optimisation ne soit exécutée qu'à intervalles de temps réguliers (période T). Au terme de cette période, c'est-à-dire à la fin de l'étape de temporisation 79, les tableaux P1 et P2 contenant les index de priorité ordonnés des canaux physiques des listes L1 et L2 sont enregistrés dans une mémoire de travail (étape 80), afin que la procédure d'optimisation emploie des listes figées pour ne pas être perturbée par les mises à jour pouvant intervenir pendant son exécution conformément à la procédure décrite en référence à la figure 5. La période T peut être limitée à quelques dizaines de millisecondes (par exemple T = 20 ms) pour éviter que cette fixation des index de priorité à l'étape 80 conduise à travailler sur des données obsolètes.

Après enregistrement des index de priorité P1, P2, l'index i de pointage dans la liste L1 est initialisé à zéro de l'étape 81. A l'étape suivante 82, cet index i est incrémenté d'une unité, et l'index j de pointage dans la liste L2 est initialisé à la longueur N2 de cette liste. Les index de priorité du i-ième canal de la liste L1 et du j-ième canal de la liste L2 sont comparés à l'étape 83. Si P1(i) > P2(j) + Δ, le BSC déclenchera un handover intracellulaire du canal F2(j), T2(j) vers le canal F1(i), T1(i) à l'étape 85, à condition que le test 84 montre que la tranche temporelle T1(i) est accessible à l'un des TRX compte tenu de la libération éventuelle de la tranche T2(j). Après avoir déclenché le handover, le BSC met à jour les listes L1 et L2 en permutant les canaux ayant fait l'objet du handover, et en triant de nouveau les listes dans l'ordre des index de priorité décroissants, à l'étape 86.

La marge Δ peut être égale à 0. Elle peut également être plus grande que 0 si on souhaite éviter de déclencher des handovers qui ne procureraient qu'un faible gain de qualité.

Si la comparaison 83 montre que P1(i) ≤ P2(j) + Δ, l'index j de pointage dans la seconde liste L2 est comparé à la longueur N2 de cette liste lors de l'étape 88. Si j = N2, c'est que la liste L1 ne contient aucun canal physique dont l'index de priorité serait suffisant pour qu'un handover soit intéressant depuis le canal physique utilisé ayant l'index de priorité le plus bas. Dans ce cas, la procédure d'optimisation se termine par un retour à l'étape de temporisation 79. Si la comparaison 88 montre que j < N2, le BSC revient à l'étape 82 afin d'examiner si le canal suivant de la liste L1 serait un bon candidat pour un handover intracellulaire.

Si le test 84 montre que le i-ième canal physique libre de la liste L1 n'est pas accessible pour accueillir une communication en cours sur le j-ième canal de la liste L2, l'index j de pointage dans la liste L2 est comparé à 1 à l'étape 89. Si j > 1, cet index est décrémenté d'une unité à l'étape 90 avant que le BSC exécute une nouvelle comparaison 83. Si la comparaison 89 montre que j = 1, l'index i de pointage dans la liste L1 est comparé à la longueur N1 de cette liste à l'étape 91. Si i = N1, c'est que le balayage de la liste L1 n'a révélé aucun canal accessible de priorité suffisante, de sorte que la procédure d'optimisation est terminée par un retour à l'étape de temporisation 79. Si la comparaison 91 montre que i < N1, le BSC revient à l'étape 82 afin de tester le canal suivant de la liste L1.

On note que la procédure de la figure 6 n'autorise qu'un seul handover intracellulaire pour chaque période T, ce qui est généralement suffisant compte tenu de la valeur relativement faible de T. Il serait toutefois possible de déclencher sur cette période plusieurs handovers entre des couples de canaux répondant au critère de la comparaison 83.

La procédure d'optimisation ci-dessus est d'une mise en oeuvre relativement simple, d'autant plus que, dans la grande majorité des cas, le BSC suivra dans l'organigramme soit le trajet 80-83, 88, 79, soit le trajet 80-86, 79.

On notera qu'il existe une certaine latitude dans la définition de la notion de canal physique auquel on associe un index de priorité dans le procédé conforme à l'invention. Dans la description qui précède, on a fait référence à la notion de canal physique la plus naturelle pour la structure TDMA/FDMA des systèmes GSM, à savoir qu'un canal physique correspond à une fréquence porteuse F1(i), F2(j), F3(k) et à un numéro de tranche temporelle T1(i), T2(j), T3(k). Dans le cas par exemple d'un système GSM à demi-débit, il est envisageable de considérer, pour la gestion des index de priorité, des canaux physiques de capacité moitié. De multiples autres conventions seraient possibles.

## Revendications

**1.** Procédé d'allocation dynamique de canaux dans un réseau cellulaire de radiocommunication, réseau dans lequel un ensemble de canaux physiques est utilisé pour former des canaux logiques dédiés à des communications en mode circuit entre des stations mobiles (MS) et des stations de base (10-16) géographiquement distribuées, chaque canal logique appartenant à un canal physique, et dans lequel, pour chaque communication établie entre une station de base et une station mobile sur un canal logique, il est mesuré périodiquement des paramètres radio représentatifs de conditions de ladite communication sur le canal logique, le procédé étant **caractérisé par** les opérations suivantes effectuées pour chaque station de base :

- associer à chaque canal physique dudit ensemble un index de priorité respectif (P1(i), P2(j), P3(k)) ;
- tenir une première liste (L1) de canaux physiques que ladite station de base n'est pas en train d'utiliser pour communiquer avec une station mobile, et au moins une seconde liste (L2, L3) de canaux physiques occupés comportant chacun au moins un canal logique actif dédié à une communication en cours entre ladite station de base et une station mobile ;
- mettre à jour les index de priorité associés aux canaux physiques de la seconde liste (L2, L3) sur la base des paramètres radio mesurés relativement aux communications en cours sur des canaux logiques appartenant auxdits canaux physiques ; et
- à l'établissement d'une communication avec une station mobile, sélectionner pour ladite communication un canal logique accessible et non actif appartenant à un canal physique dont l'index de priorité est maximal.

**2.** Procédé selon la revendication 1, dans lequel, pour chaque station de base, on compare les index de priorité (P1(i), P2(j)) de canaux des première et seconde listes (L1, L2) pour déclencher un transfert automatique intracellulaire de communication depuis un canal logique appartenant à un canal physique occupé de la seconde liste vers un canal logique accessible appartenant à un canal physique de la première liste dont l'index de priorité est supérieur à celui dudit canal physique occupé de la seconde liste.

**3.** Procédé selon la revendication 1 ou 2, dans lequel les canaux physiques de chaque liste sont rangés dans l'ordre des index de priorité décroissants.

**Patentansprüche**

**1.** Dynamisches Kanalallokationsver-fahren in einem zellularen Funkverkehrsnetz, einem Netz, in dem eine Menge von physischen Kanälen verwendet wird zum Bilden von logischen Kanälen, die zu Kommunikationen zwischen mobilen Stationen (MS) und geographisch verteilten Basisstationen (10-16) im Leitungs-Modus bestimmt sind, wobei jeder logische Kanal zugehörig zu einem physischen Kanal ist, und in dem für jede zwischen einer Basisstation und einer mobilen Station auf einem logischen Kanal aufgebauten Kommunikation periodisch Funkparameter gemessen werden, welche Zustände dieser Kommunikation auf dem logischen Kanal repräsentieren, wobei das Verfahren durch die nachfolgenden für jede Basisstation ausgeführten Operationen gekennzeichnet ist:

- assoziieren eines jeweiligen Prioritätsindex (P1(i), P2(j), P3(k)) zu jedem physischen Kanal der Menge;
- halten einer ersten Liste (L1) von physischen Kanälen, welche die Basisstation nicht gerade zum Kommunizieren mit einer mobilen Station verwendet und wenigstens einer zweiten Liste (L2, L3) der belegten physischen Kanäle, von denen jeder wenigstens einen zu einer laufenden Kommunikation zwischen der Basisstation und einer mobilen Station bestimmten, aktiven logischen Kanal umfasst;
- aktualisieren der den physischen Kanälen der zweiten Liste (L2, L3) assoziierten Prioritätsindizes auf Basis der gemessenen Funkparameter bezogen auf die auf den den physischen Kanälen zugehörigen logischen Kanälen laufenden Kommunikationen;
- beim Aufbau einer Kommunikation mit einer mobilen Station auswählen eines zugänglichen und nicht aktiven logischen Kanals für diese Kommunikation, der zu einem physischen Kanal zugehörig ist, dessen Prioritätsindex maximal ist.

**2.** Verfahren nach Anspruch 1, bei dem für jede Basisstation die Prioritätsindizes (P1(i), P2(j)) der Kanäle der ersten und zweiten Listen (L1, L2) verglichen werden, um einen automatischen intra-zellularen Kommunikationstransfer auszulösen von einem einem belegten physischen Kanal der zweiten Liste zugehörigen logischen Kanal zu einem zugänglichen logischen Kanal, welcher einem physischen der ersten Liste zugehörig ist, dessen Prioritätsindex höher ist als der des belegten physischen Kanals der zweiten Liste.

**3.** Verfahren nach Anspruch 1 oder 2, bei dem die physischen Kanäle jeder Liste in der Reihenfolge der abnehmenden Prioritätsindizes sortiert sind.

**Claims**

**1.** A method of dynamically allocating channels in a cellular radio network, wherein a set of physical channels is used in said network to form logical channels dedicated to communications in circuit mode between mobile stations (MS) and geographically distributed base stations (10-16), each logical channel belonging to a physical channel, and wherein, for each communication established on a logical channel between a base station and a mobile station, radio parameters representative of conditions of said communication on said logical channel are periodically measured, the method being **characterised by** the following steps, carried out for each base station:

- associating a respective priority index (P1(i), P2(j), P3(k)) to each physical channel of said set;
- holding a first list (L1) of physical channels which are not being used by said base station to communicate with any mobile station, and at least a second list (L2, L3) of busy physical channels, each having at least one active logical channel dedicated to a communication currently taking place between said base station and any mobile station;
- updating the priority indices associated with the physical channels of the second list (L2, L3) on the basis of the radio parameters measured in relation to communications taking place on the logical channels belonging to said physical channels of the second list; and
- when establishing a communication with a mobile station, selecting for said communication an accessible and non-active logical channel belonging to a physical channel whose priority index is maximum.

**2.** A method as claimed in claim 1, further comprising, for each base station, the step of comparing the priority indices (P1(i), P2(j)) of channels from the first and second lists (L1, L2) in order to trigger a handover from a logical channel belonging to a busy physical channel from the second list to an accessible logical channel belonging to a physical channel from the first list whose priority index is higher than that of said busy physical channel from the second list.

**3.** A method as claimed in claim 1 or 2, wherein the physical channels of each list are ranked in decreasing order of the priority indices.

# FIG.1

BTS 10 : L1,L2,L3
BTS 14 : L1,L2,L3
BTS 15 : L1,L2,L3

# FIG.2

EP 0 986 928 B1

L1 {

| F1(1) | F1(2) | ---- | F1(N1) |
|-------|-------|------|--------|
| T1(1) | T1(2) | ---- | T1(N1) |
| P1(1) | P1(2) | ---- | P1(N1) |

$P1(1) \geqslant P1(2) \geqslant ... \geqslant P1(N1)$

L2 {

| F2(1) | F2(2) | ---- | F2(N2) |
|-------|-------|------|--------|
| T2(1) | T2(2) | ---- | T2(N2) |
| P2(1) | P2(2) | ---- | P2(N2) |

$P2(1) \geqslant P2(2) \geqslant ... \geqslant P2(N2)$

L3 {

| F3(1) | F3(2) | ---- | F3(N3) |
|-------|-------|------|--------|
| T3(1) | T3(2) | ---- | T3(N3) |
| NB(1) | NB(2) | ---- | NB(N3) |
| LOC(1) | LOC(2) | ---- | LOC(N3) |
| P3(1) | P3(2) | ---- | P3(N3) |

$P3(1) \geqslant P3(2) \geqslant ... \geqslant P3(N3)$

*FIG.3*

$k = 1$ — 30

oui — $k > N3 ?$ — non — 31 — $k = k + 1$

32

oui — $NB(k) < M ?$ — non

33

34 — $m = 1$

$m = m + 1$ — 35

36

oui — $LOC(k,m) = 0 ?$ — non

Sélection Canal Logique
$F3(k), T3(k), m$ — 37

$NB(k) = NB(k) + 1$
$LOC(k,m) = 1$ — 38

40 — $i = 1$

oui — $i > N1 ?$ — non — $i = i + 1$

42 — 41

oui — $T1(i)$ accessible ? — non

43

pas de
ressource
disponible

Sélection Canal Logique
$F1(i), T1(i), 1$ — 44

Insérer Canal Sélectionné
dans la liste L3 selon
priorités P3
$N3 = N3 + 1$ — 45

Supprimer i-ième canal
de la liste L1
$N1 = N1 - 1$ — 46

gestion priorité

*FIG.4*

gestion priorité

# *FIG.5*

75

oui ⟨ n échantillons de mesure acquis ? ⟩ non

76

oui ⟨ Libération du canal ? ⟩ non

Supprimer j−ième canal de la liste L2
N2 = N2 − 1 —77

Insérer Canal Libéré dans la liste L1 selon priorités P1
N1 = N1 + 1 —78

fin

Calcul qualité :
$Q(t) = f(RXLEV_n, RXQUAL_n)$ —70

Mise à jour priorité :
$P2(j) = g[P2(j), Q(t), Q(t-1), ..., Q(t-q)]$ —71

Réordonner liste L2 selon priorités P2 —72

*FIG.6*

Temporisation T — 79

Enregistrement priorités P1, P2 — 80

i = 0 — 81

i = i + 1
j = N2 — 82

oui / P1(i) > P2(j) ÷ Δ ? \ non
83

88

non / j = N2 ? \ oui
(inverted: oui / j = N2 ? \ non)

84
oui / T1(i) accessible
avec T2(j) libéré ? \ non

oui / j = 1 ? \ non
89

j = j - 1 — 90

91
oui / i = N1 ? \ non

Déclenchement HO
intracellulaire
du canal F2(j), T2(j)
vers le canal F1(i), T1(i) — 85

Mise à jour listes L1 et L2
Tri selon priorités P1, P2 — 86